# EUROPEAN PATENT SPECIFICATION

(11) **EP 0 435 139 B1**
(45) Date of publication and mention of the grant of the patent: **12.06.1996**
(21) Application number: 90124607.4
(22) Date of filing: 18.12.1990
(51) Int. Cl.: G05B 19/05

(54) **A programmable controller for executing SFC language programs**
Programmierbare Steuerung zur Durchführung von SFC-Sprachprogrammen
Contrôleur programmable pour éxecuter des programmes en langage SFC

(30) Priority: 26.12.1989 JP 337934/89
(43) Date of publication of application: 03.07.1991
(73) Proprietor: MITSUBISHI DENKI KABUSHIKI KAISHA, Tokyo 100 (JP)
(72) Inventor: Iwata, Yasunobu, c/o Mitsubishi Denki K.K., Higashi-ku, Nagoya-shi, Aichi (JP)
(74) Representative: Sajda, Wolf E., Dipl.-Phys.

(56) References cited:
- EP-A- 0 200 974
- EP-A- 0 331 060
- DE-A- 3 630 959
- FR-A- 2 461 294
- US-A- 4 115 853
- US-A- 4 189 773
- US-A- 4 449 180
- US-A- 4 488 258

## Description

The present invention relates to a programmable controller for executing a sequence program which comprises a plurality of steps that follow a designated path, each step comprising object and transition portions for implementation by a respective run program and identified by a label, the controller comprising a memory for storing the run programs at respective addresses.

The present invention also relates to a method of executing a sequence program comprising a plurality of steps operative along a designated path, each step being identified by a label and having a corresponding run program stored in a memory.

Recently a process of converting a program written in sequential function chart (SFC) language into a sequence program and loading the sequence program into a programmable controller (hereinafter referred to as a "PC") has been put into practical use.

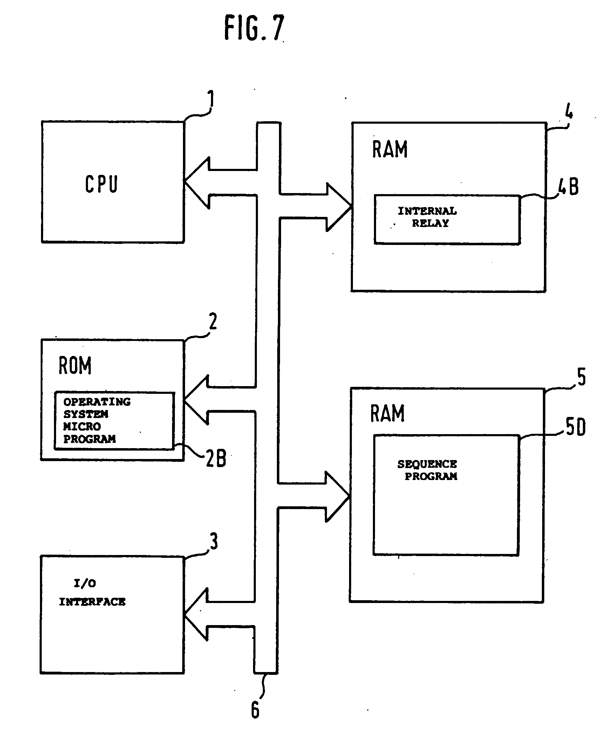

Fig. 7 is a block diagram illustrating the configuration of PCs known in the prior art. In Fig. 7, a CPU 1 for running a sequence program is connected by a common bus 6 to several components including a ROM 2 for storing a microprogram 2B as an operating system (OS) which controls the CPU 1, an input/output interface 3 for transferring data to and from an object to be controlled (not illustrated), a program storing RAM 5 for storing a sequence program 5D, and a RAM 4 for use during execution of the sequence program, including an internal relay module 4B that operates to provide programmed logical contacts.

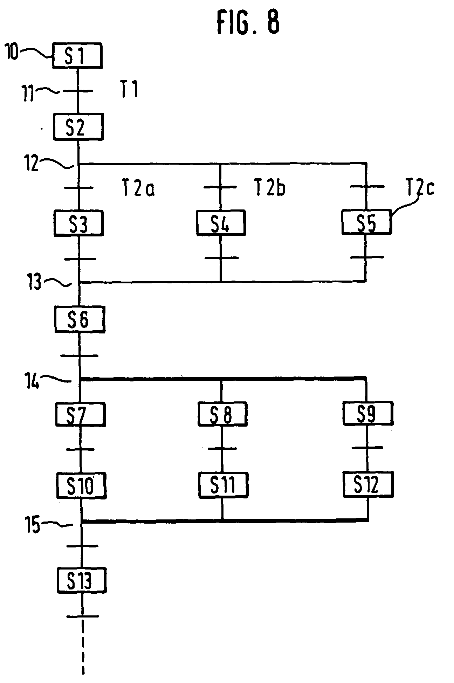

Fig. 8 gives an example of an SFC program organized in a ladder chart format. The SFC program is a representation of a control sequence in a flow format, comprising a combination of steps (designated by "S") indicating certain definite operations and "transitions" (designated by "T") indicating transition conditions for the execution of the steps. A step being executed is referred to as an "active step", and is made inactive and passes execution to a subsequent step when its incidental transition condition is established. In Fig. 8, numeral 10 indicates a step (S1) and numeral 11 a "transition" (T1). A transition from the step being executed to the next step to be executed is made in several ways. Transition 11 is a "serial transition" which causes an active step (S1) to transit to the only step (S2) to which it connects. A "selective branch" 12 causes an active step (S2) to be followed by any of a plurality of branch destinations, depending on which transition condition T2a-T2c is established first. A "selective link" 13 indicates a link of the selective branch 12, to an active step (S6). A "parallel branch" 14 executes a plurality of steps (S7 to S9) concurrently and executes following steps S10 to S12 when their transition conditions are established. Finally, a "parallel link" 15 indicates the link of paths from a plurality of steps being executed concurrently by the parallel branch 14. When the execution of all the parallel-branched paths is complete, the parallel link 15 is completed and the next step (S13) is then executed.

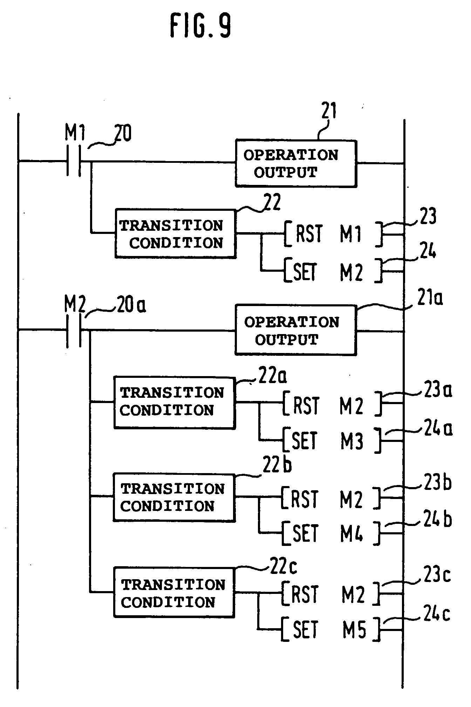

Fig. 9 is a sequence ladder diagram which illustrates an example of a sequence program developed from the SFC program shown in Fig. 8. In Fig. 9, the numerals 20 and 20a identify internal relay contacts which are logical contacts. These contacts are switched ON/OFF in accordance with the activation/deactivation of the corresponding steps in the SFC program. Also in the figure are operation output instructions 21 and 21a for steps executed when the corresponding steps in the SFC program become active, i.e. when the internal relay contacts 20,20a are switched ON. Further, 22 and 22a to 22c are transition condition instructions for "transitions" established when the corresponding steps become active. Elements 23 and 23a to 23c are "reset" instructions executed when the corresponding transition conditions are established, for switching OFF the internal relay contact 20 or 20a correspondingly. Finally, elements 24 and 24a to 24c are "set" instructions executed when the corresponding transition conditions are established for switching ON internal relay contacts corresponding to the next active steps.

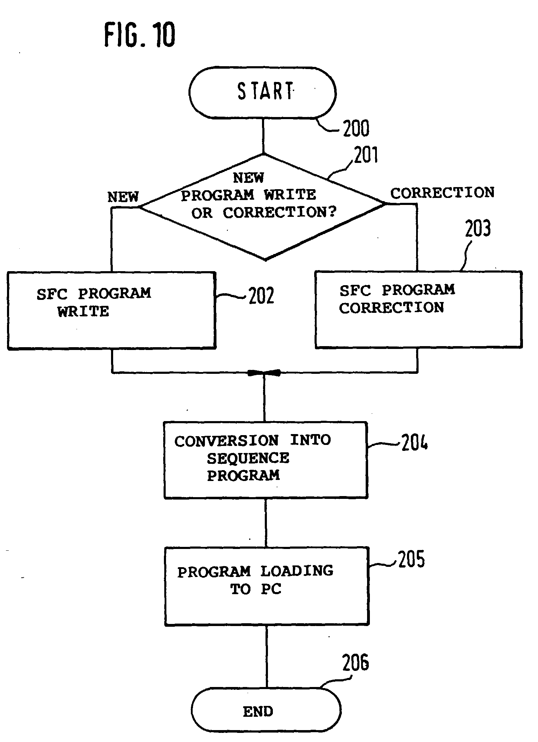

Fig. 10 is a flowchart illustrating a procedure for converting the SFC program written by a program writing device (not illustrated) into a sequence program and loading the sequence program into the PC.

In operation, the program writing device is started up at step 200. Whether the SFC program is to be newly written or to be corrected is judged at step 210. If a new program is to be written, an SFC program like that shown in Fig. 8 is prepared at step 202. If the SFC program is to be corrected, it is corrected and rewritten at step 203. In either case, at step 204, the resultant SFC program is then converted into a sequence program (represented by the ladder diagram of Fig. 9) by a known technique. At step 205, the sequence program is loaded into the program storing RAM 5 of the PC, shown in Fig. 7, and the sequence is terminated at step 206.

The CPU 1 runs the sequence program stored in the program storing RAM 5 according to the microprogram 2B placed in the ROM 2. The execution/non-execution of each step is processed on the basis of the execution condition (i.e. ON>OFF) of the corresponding internal relays in module 4B, and in accordance with the activation/deactivation of each step. For example, when the step S1 in Fig. 8 is active, the subsequent operation output instruction 21 in Fig. 9 is executed because the internal relay contact 20 is ON. The transition condition 22, corresponding to the transition condition of the transition T1 in Fig. 8, is also judged. If the result of the instruction is established, an instruction for deactivating step S1, i.e. the reset instruction 23 for switching OFF the internal relay contact 20, is executed. Also, the set instruction for activating the subsequent step S2, i.e. the instruction 24 for switching ON the internal relay contact 20A (M2), is executed.

In the operation of the PC to control an object, the sequence program is run repeatedly by the CPU 1. As a result, the SFC program is followed, Specifically, performance of the active step takes place and condition judgement of a transition incidental to that active step and a change of the active step at the establishment of its condition are performed. This performance corresponds directly to the ON/OFF, or set/reset, of the internal relay(s) related to each step.

If the sequence program 5D must be changed, in whole or in part, data stored in the program storing RAM 5 must be changed but this is difficult to do. Moreover, once converted into sequence form, it is difficult to enter partial corrections to the program. Therefore, the whole SFC program must be rewritten, reconverted to a sequence program and reloaded into the PC. This results in several problems for the prior art PC. First, the program conversion process takes a relatively long time. Second, if the program has been changed to correct an error, the effect of the change cannot be determined until the rewritten program is converted, reloaded and run. Further, if it is desired to execute only one of the paths in the parallel branch of the SFC program, modification of the SFC program must be accomplished during debugging of the sequence program. This is difficult to do in the prior art and results in significant inconvenience for the program user.

A further problem with the prior art is that, during operation of the program, the particular step that was active at a given time can not be immediately identified for purposes of trouble shooting or modification. Thus, the entire program had to be searched in order to identify what step was active.

The document US-A-4 115 853 discloses a numerical control system processor which stores and executes a control program of the type found in programmable controllers. A number of editing features are provided which allow changes to be made in the control program including insert and delete functions which result in the shifting of control program instructions. A jump table is provided to store memory addresses of jump instruction targets and this table is updated by special instructions within the control program after editing functions are performed. The jump instructions refer to this jump table when executed to obtain their target memory addresses, and the jump instructions are of the type which allow the target addresses to be changed during program editing.

The document US-A-4 488 258 discloses a programmable controller and its associated program terminal. The program terminal, not the controller, includes circuitry for inserting a comment instruction into the control program. The program controller itself ignores the comment information when executing the control program, however, the program terminal is operable to display the comment information as an aid to the programmer. The program terminal itself is the means for defining a ladder program.

The document US-A-4 449 180 discloses a sequence program inputting device and, similarly to US-A-4 488 258, relates to a ladder program writing device and not to a programmable controller itself. In this prior art document, a separate producing circuit is provided for producing a ladder program to be displayed on a display screen, and a separate converting circuit for converting the ladder diagram to a machine instruction sequence of the programmable sequence controller is provided to enable independent operations of those circuits.

The document EP-A-0 331 060 discloses a programmable controller with a tokenized source code stored in a memory therein. When the source code of the control program is compiled, the compiled program contains not only the object code, but also tokenized versions of parts of the source code, which can more easily be regenerated back to the source code and ladder diagram. These tokenized portions facilitate the editing of the program because the original ladder diagram may be recreated from a combination of the object code and a tokenized version of the source code.

The object of the present invention is to provide a programmable controller for and a method of executing a sequence program by means of which editing and debugging a ladder or sequence program is facilitated so that the speed of execution of a sequence program and the efficiency with which the sequence program can be corrected is improved.

According to the invention, a programmable controller for executing a sequence program is disclosed which comprises a plurality of steps that follow a designated path, each step comprising object and transition portions for implementation by a respective run program and identified by a label, the controller comprising a memory for storing the run programs at respective addresses, and is characterized by
a) an active step table for storing at least one label indicating an active step in the run program,
b) a step execution address table for storing memory addresses of the run program in correspondence with the label or labels.
c) an active step execution means for reading from the step execution address table the memory address of the run program corresponding to the label stored in the active step table and for reading and executing the run program corresponding to the active step,
d) a step transition management table for storing management information for a transition from a currently active step to the next active step, wherein the management information comprises at least an identification of the number of next active steps to which the current active step transits directly and at least one label for each next active step,
e) an active step transition means for storing a label for the next active step in the active step table in accordance with the transition management information stored in the step transition management table.

Also, according to the invention a method of executing a sequence program is disclosed comprising a plurality of steps operative along the designated path, each step being identified by a label and having a corresponding run program stored in a memory, wherein the method is characterized by the following steps:
a) storing in an active step table the label of at least one active step in the program,
b) storing in a step execution address table memory addresses of the run programs corresponding to the label or labels,
c) reading from the step execution address table the memory address of the run program corresponding to the label stored in the active step table and executing the run program corresponding to the currently active step,
d) storing in a transition management table management information concerning the transition from a currently active step to the next active step, wherein the management information comprises at least an identification of the number of next active steps to which the current active step transits directly and at least one label for each next active step,
e) storing the label for the next active step in the active step table in accordance with the transition management information stored in the transition management table in step (d).

Further embodiments of the controller and the method according to the invention have been specified in the dependent claims.

According to the present invention, various tables are provided in the RAMs of the claimed controller which address and monitor the active steps of the ladder program. For this registering and monitoring of the steps, associated program routines, for example active step execution means and active step transition means, are provided in the program section of the controller. These means which allow control of the active steps additionally enable the controller to edit the sequence program or to debug the sequence program by the means of a step transition management table for storing management information defining a transition from the present active step to the next active step.

The present invention will now be described by way of example with reference to the accompanying drawings, in which:-
Fig. 1 is a block diagram illustrating a configuration of a PC according to first and second embodiments of the invention;
Fig.2 is a flowchart illustrating an execution procedure of the SFC program run by the PC shown in Fig. 1;
Fig. 3 is a flowchart illustrating a procedure of writing, correcting and downloading to the PC of the SFC program to be run by the PC shown in Fig. 1;
Figs. 4a and 4b are diagrams illustrating an example of a parallel branch in the SFC program and an example of its step transition management table;
Figs. 5a and 5b are diagrams illustrating examples of path designation for the examples shown in Figs. 4a and 4b;
Fig. 6a illustrates a menu screen displayed by key-stroking and Fig. 6b is a path designation screen displayed by selecting "path designation" from among various functions displayed on the menu screen shown in Fig. 6a;
Fig. 7 is a block diagram illustrating the configuration of a PC in the prior art;
Fig. 8 is a diagram illustrating an example of an SFC program;
Fig. 9 is a ladder diagram of a sequence program partly converted from the SFC program shown in Fig. 8; and
Fig. 10 is a flowchart illustrating a procedure of writing, correcting, and downloading to the PC the SFC program run by the PC shown in Fig. 7.

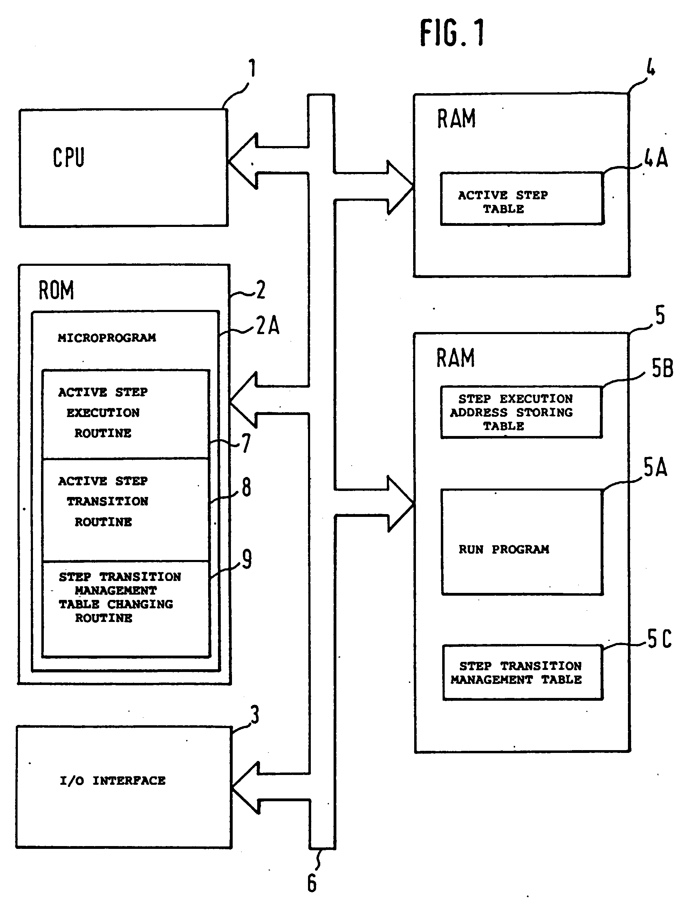

The first and the second embodiments of the invention are described with reference to Figs. 1 to 5, wherein reference numerals identical to those of the prior art figures designate identical or corresponding parts.

Fig. 1 is a block diagram illustrating a configuration of the PC in the first and second embodiments of the present invention. Referring to Fig. 1, CPU 1 is connected by bus 6 to several components, including a variety of storage elements and an I/O interface structure 3 that connects to the controlled object, an input device, a display and like peripherals. One storage element, RAM 4, is a conventional "OS working RAM" that stores an operating system used for operating the CPU 1. The RAM 4 also contains an active step table 4A for storing an I.D. number assigned to steps in the SFC program that will become active during the program execution. One or more run programs 5A, each corresponding to a step of the SFC program (hereinafter referred to as the "SFC steps"), are stored in a program storing RAM 5. Each of the run programs 5A comprises an "operation output" portion for executing a sequence instruction for an SFC step and for providing its operation output, and a "transition condition" portion for determining a transition condition to the next active step. The operation output portion and transition condition portion for each SFC step includes head addresses that correspond to an I.D. number uniquely assigned to each step. The operation output portion and the transition condition portion are equivalent to the operation output portion 21 and the transition condition portion 22 in the sequence program arrangement of the prior art, respectively, and comprises an instruction step string composed of a plurality of instruction steps. RAM 5 also contains a step execution address storing table 5B that is operative to correlate between the step I.D. number of an SFC step and head addresses of both the operation output portion and the transition condition portion of the run program 5A corresponding to the SFC step. The address identified and stored in table 5B is readily available to point to or identify the location of an active step, specifically, the respective run program in memory 5A. A step transition management table 5C in RAM 5 is used for storing step transition destination management information for each SFC step so that from one active step the process can correctly proceed to the next active step. For example, in the case of a parallel branch (e.g., branch 14, as seen in Figure 8), the table 5C stores for step S6 the number of transition destination steps (i.e., three) and the transition destination step I.D. numbers (i.e., S7, S8, S9).

ROM 2 is also connected to bus 6 and contains a microprogram 2A. By running the microprogram 2A, the CPU 1 conducts several functions. Using an active step execution routine 7, the CPU reads the step number of the active step form the active step table 4A, reads the head addresses of the operation output portion and the transition condition portion of the run program corresponding to the step number of the active step from table 5B, reads the run program 5A from the program storing RAM 5 in accordance with the head addresses so obtained , and executes the operation output portion and the transition condition portion. The CPU 1 also runs active step transition routine 8 for reading the step transition destination management information from the step transition management table 5C and for storing in active step table 4A the step I.D. number of the next active step to which transit will be made. Finally, the CPU 1 runs a step transition management table changing routine 9 for changing the transition destination management information, such as the number of SFC step transition destinations and the transition destination step I.D. numbers, stored in the step transition management table 5C, on the basis of an external command.

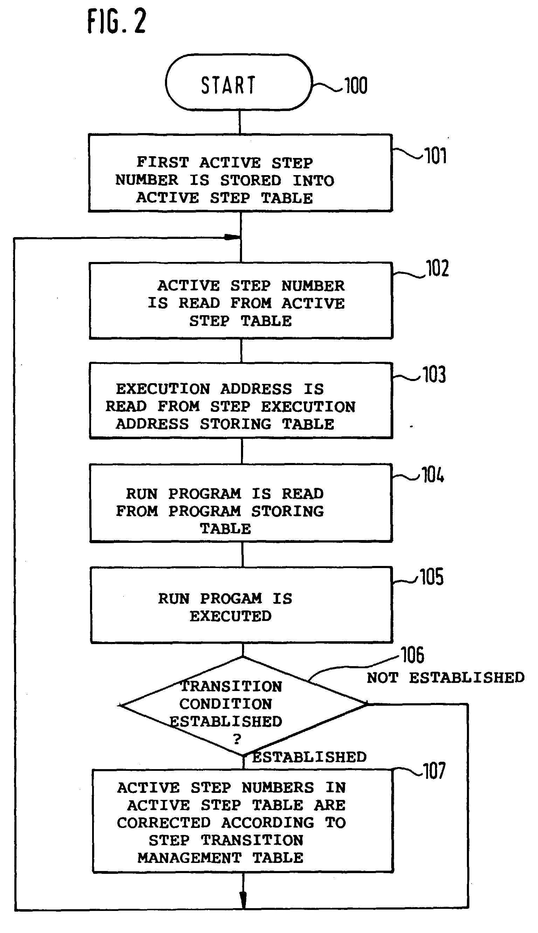

Fig. 2 is a flowchart illustrating a procedure for running the SFC program in the PC.

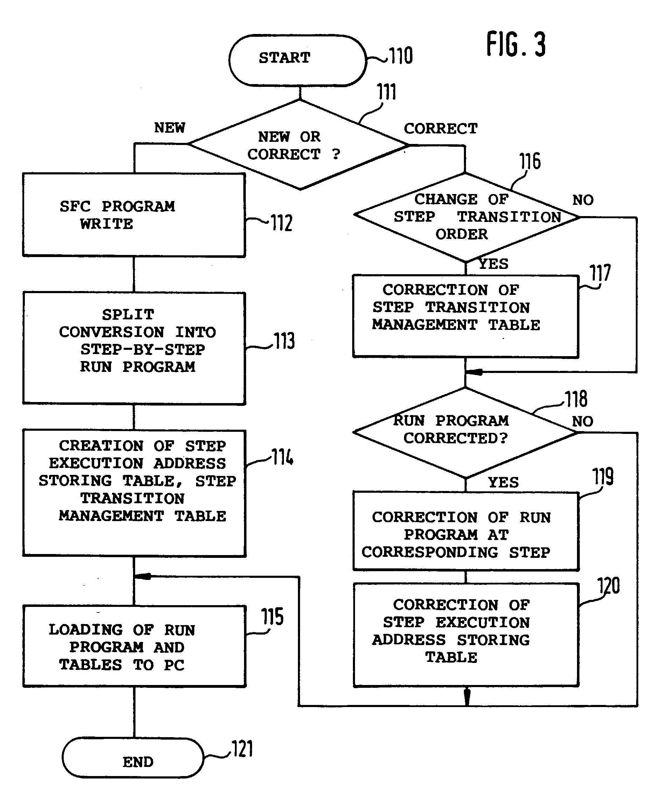

Figure 3 is a flowchart illustrating a procedure for writing, correcting and downloading to the PC the SFC program, using a peripheral device (not illustrated) as a programming device.

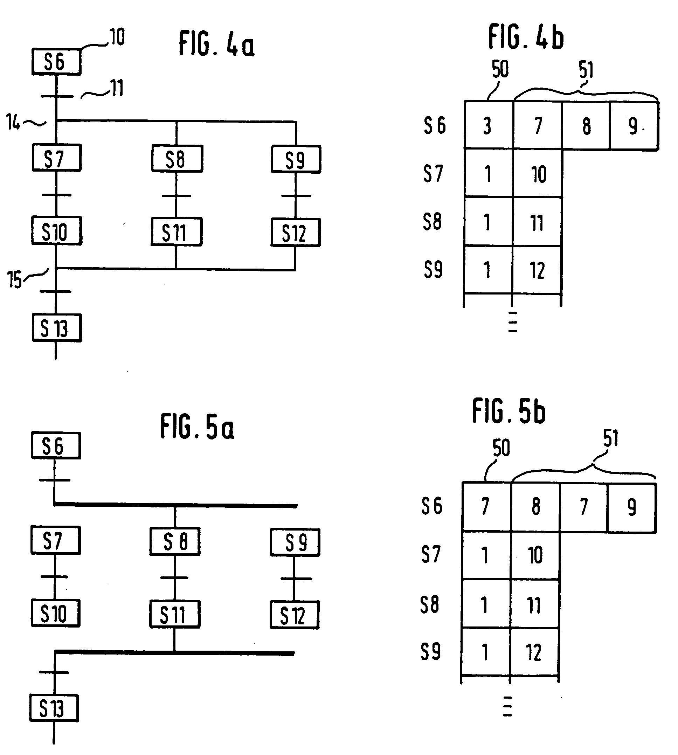

Figs. 4a and 4b are diagrams showing an example of a parallel branch having three branched paths in the SFC program and an example of the step transition management table 5C corresponding to the parallel branch in the SFC program, respectively.

Figs. 5a and 5b are diagrams showing an example where only the centre path of the three branched paths shown in Figs. 4a,4b is executed and an example of the step transition management table 5C corresponding to such SFC program, respectively. In Figs. 4b and 5b, the number 50 indicates the quantity or number of transition destination step storage locations. The number 51 indicates transition destination step number storage locations that store the transition destination step I.D. numbers. Both the portions 50 and 51 are configured as one or more bytes in memory so that the number of transition destination steps and the transition destination step I.D. numbers may be stored as numerical values.

Operation of the invention is described according to the flowchart shown in Fig. 2. When execution is started at step 100, initialization is made at step 101, and the I.D. number of the first step to be an active step is automatically stored in the active step table 4A in the RAM 4. Then, the CPU 1 runs the microprogram 2A to cause the active step execution routine 7 to read the step I.D. number for the active step from the active step table 4A at step 102. Next, the execution routine 7 reads the head addresses of the run program corresponding to the read step I.D. number from among the run programs 5A at step 103. The read addresses comprise the head address of the operation output portion and that of the transition condition portion of the run program. The CPU 1 will read the corresponding run program 5A from the RAM 5 at step 104, and execute the operation output portion and the transition condition portion of the read run program 5A at step 105. Then, at step 106, a judgement is made as to whether or not the transition condition of the active step has been established. This judgement is made on the basis of the execution of the transition condition portion. If the condition has not been established, the procedure returns to step 102. If the condition has been established, the active step transition routine 8 checks the step transition management table 5C at step 107, reads the number identifying the quantity of transition destination steps which are to be the next active steps, and the transition destination step I.D. numbers, corrects the active step table 4A on the basis of the read step I.D. number(s) and returns to step 102.

The method by which the active step transition routine 8 judges the next active step will now be described with reference to Figs. 2, 4a and 4b. When the transition condition associated with the first active step (here, S6) is established at step 106 of Fig. 2 after execution of SFC step S6 (Fig. 4a) is completed, the active step transition routine finds that there are three transition destinations in the following manner. First, it checks the portion 50 of the step transition management table 5C shown in Fig. 4b, which corresponds to the SFC step (S6) and identifies the number (3) of transition destination steps. Second, on the basis of the identified number of steps, it reads the first three step I.D. numbers from the transition destination step number storing portion 51 of the table 5C. In step 107, the active step table 4A is corrected to store "3" as the number of transition destination steps, and to store the transition destination step numbers (7 to 9).

Each time a closed loop consisting of the steps 102 to 107 in the flowchart shown in fig. 2 is carried out, one active step (or group of active steps) in the SFC program is executed. In the case of plural active steps, the steps may run concurrently.

An END processing portion of the SFC program is supplied as one of the run programs. The step transition management table 5C is written so that when END processing is complete, the active step returns to the first step of the SFC program. As a result, the SFC program is continually repeated.

Since the prior art shown in Fig. 7 runs the SFC program after conversion thereof into an ordinary sequence program, it executes not only active steps but also inactive steps. However, since the embodiment of the present invention only executes run programs corresponding to active steps, it provides a highly responsive PC which significantly reduces the length of time required for one scan of the SFC program as compared to the prior art. This feature is particularly important when debugging a program under varying operating conditions.

The procedures of SFC program writing, correcting and downloading to the PC will now be described according to the flowchart shown in Fig. 3. In Fig. 3, a peripheral device (not illustrated) starts execution of the procedure at step 110. The procedure, at step 111, judges whether an incoming SFC program write request is for writing a new program or correcting an existing program. If the request is to write a new program, the SFC program is written at step 112, and the written SFC program is automatically converted into run programs 5A in correspondence with the SFC steps executable by the PC at step 113. Thereafter, the step execution address storing table 5B and the step transition management table 5C are automatically created at step 114. Finally, the run programs 5A, the step execution address storing table 5B and the step transition management table 5C are downloaded to the program storing RAM 5 of the PC at step 115.

If the SFC program write request is for correction of a program, whether the correction is concerned with a step transition destination sequence change or not is judged at step 116. If the answer is NO, the procedure jumps to step 118. If the answer is YES, the corresponding area of the step transition management table 5C is corrected at step 117. Then, at step 118, a judgement is made as to whether or not a correction has been made to the content of the run program itself. If the answer is NO, the procedure jumps to the step 115. If YES, the SFC program area of the corresponding SFC step is corrected and automatically converted into a run program at step 119. The corresponding areas of the step execution address storing table 5B and the step transition management table 5C are automatically created or corrected at step 120. Finally, the run program 5A, the step execution address storing table 5B and the step transition management table 5C are downloaded to the program storing RAM 5 of the PC at step 115, and the sequence is completed at step 121.

Since the SFC program is divided into several SFC steps, automatically converted into independent run program, and stored in the program storing RAM 5 as described above, the correction or modification of a program may only require a change of the run program(s) 5A corresponding to the relevant step(s). Moreover, steps can be reorganized or deleted simply by changing the content of one or more of the tables, for example by changing the pointers to the run programs for each of the respective SFC steps. Thus, the correction can be finished in a relatively short time.

A debugging method for an SFC program will now be described with reference to Figs. 5a and 5b. For example, in the parallel branch shown in Fig. 4a, assume that it is desired to modify the SFC program so as to execute only the central path including the step S8, as shown in Fig. 5a. In this case, the step transition management table 5C is changed as shown in Fig. 5b (explained below) by the step transition management table changing routine 9. As seen in Fig. 5a, step S6 connects only to step S8, S11 and S13 in sequence. There is no connection between steps S7-S10 or steps S9-S12 in the program. These steps remain as run programs in area 5A for subsequent connection/selection as desired.

In the SFC program shown in Fig. 4a, for example, when the parallel branch is made from step S6 to steps S7-S9, the number of transition destinations stored in the transition destination storing portion 50 is 3. Also, the transition destination step numbers stored in the transition destination step number storing portion 51 are 7, 8, 9 in the step transition management table 5C shown in Fig. 4b. When it is desired to cause a transition from step S6 to only step S8, as shown in Fig. 5a, the desired specified path is set up by writing into area 50 the number 1, representing the number of transition destination steps. Also, the number 8 is moved to the first location of area 51, representing the sole transition destination step number. Step numbers 7 and 9 remain in area 51 as data identifying available but not specified paths. These paths are can be identified for later access, if desired, by changing the table again. For example, when it is desired to cancel the specified path, it is only necessary to return the number of transition destination steps to the original number 3.

Similarly, when it is desired to change the priority of transitions judged for a selective branch, that change can be made by changing the transition destination step numbers to be judged by the step transition management table 5C, using routine 9. For example, in Fig. 8, when step S2 is the active step, the sequence of transition condition judgement is made in the order of transitions T2a, T2b, T2c at the selective branch 12 to activate the SFC step following the established transition. This may easily be changed to the order T2b, T2a, T2c, for example. This is accomplished by changing the sequence of the judged transitions in the step transition management table 5C to T2b, T2a, T2c by means of the step transition management table changing routine 9.

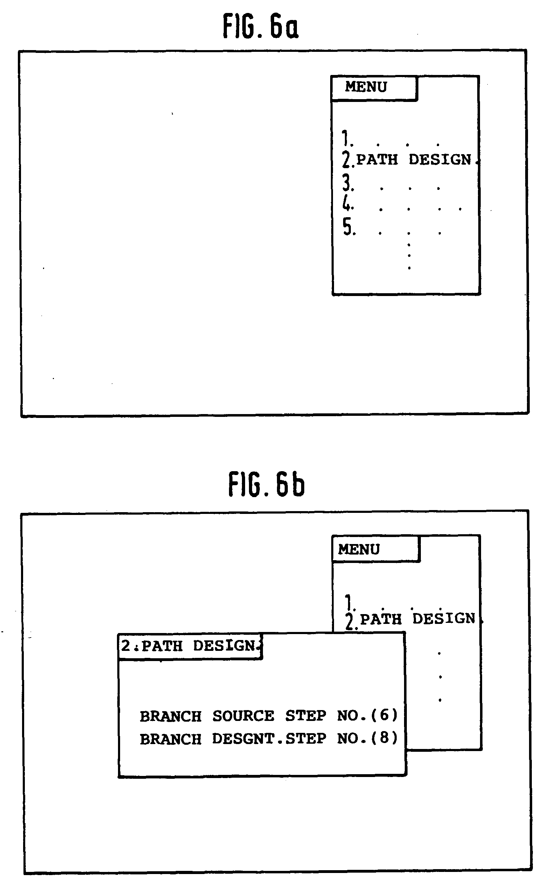

Figs. 6a and 6b illustrate an example of controlling the path designation operation procedure from a peripheral device by way of a screen display. To execute only the central path among the three parallel branched paths in the SFC program shown in Fig. 4a, for example, the branch source step 6 and the branch destination step number 8 are specified to allow only the step S8 to be executed from among the three parallel branches from step S6, as shown in Fig. 5a. Similarly, the path could be reconfigured from a serial to a parallel path.

It will be apparent that the first embodiment, as described above, provides a PC which improves the execution speed of SFC programs and corrects SFC programs efficiently, owing to the active step execution routine, the active step transition routine and the split-conversion of the SFC program into run programs corresponding to the SFC steps. The run programs are executed using the active step table, the step execution address storing table and the step transition management table.

It will also be apparent that the second embodiment provides a PC which easily permits execution of a selected specified path or paths from among plural paths branched in parallel via use of a step transition management table changing routine that changes the management information on the transition of the corresponding step stored in the step transition management table.

The present invention is particularly useful for debugging and testing of programs since active steps can be identified, set and changed quickly. Program paths can be readily reorganized and a visual display of the operation and available selections can be easily presented to an operator for efficient diagnosis, analysis and modification.

## Claims

1. A programmable controller for executing a sequence program which comprises a plurality of steps that follow a designated path, each step comprising object and transition portions for implementation by a respective run program and identified by a label, said controller comprising:
a memory (5) for storing the run programs (5A) at respective addresses,
characterized by
a) an active step table (4A) for storing at least one label indicating an active step in the run program (5A),
b) a step execution address table (5B) for storing memory addresses of the run program (5A) in correspondence with the label or labels,
c) an active step execution means (7) for reading from the step execution address table (5B) the memory address of the run program (5A) corresponding to the label stored in the active step table (4A) and for reading and executing the run program (5A) corresponding to the active step,
d) a step transition management table (5C) for storing management information for a transition from a currently active step to the next active step, wherein the management information comprises at least an identification of the number of next active steps to which the current active step transits directly and at least one label for each next active step, and
e) an active step transition means (8) for storing a label for the next active step in the active step table (4A) in accordance with the transition management information stored in the step transition management table (5C).

2. A controller as claimed in Claim 1,
further comprising a step transition management table changing means (9) for changing the management information stored in the step transition management table (5C).

3. A controller as claimed in Claim 1 or 2,
wherein the management information is changeable by external command.

4. A method of executing a sequence program comprising a plurality of steps operative along a designated path, each step being identified by a label and having a corresponding run program (5A) stored in a memory (5), the method being characterized by the steps of:
a) storing (101) in an active step table (4A) the label of at least one active step in the program,
b) storing in a step execution address table (5B) memory addresses of the run programs (5A) corresponding to the label or labels,
c) reading from the step execution address table (5B) the memory address of the run program (5A) corresponding to the label stored in the active step table (4A) and executing the run program (5A) corresponding to the currently active step,
d) storing in a transition management table (5C) management information concerning the transition from a currently active step to the next active step, wherein the management information comprises at least an identification of the number of next active steps to which the current active step transits directly and at least one label for each next active step, and
e) storing the label for the next active step in the active step table (4A) in accordance with the transition management information stored in the transition management table (5C) in (d).

5. A method as claimed in Claim 4,
comprising the further step of selectively changing management information stored in the transition management table (5C).

6. A method of Claim 4 or 5,
further comprising the debugging steps of:
f) repeating steps (a) to (e) until the program has been run;
g) identifying an error and those steps that are potential sources of the error;
h) changing the management information stored in the step transition management table (5C) to specify a different step sequence in order to locate or correct the error;
i) analyzing the effect of the changed sequence to determine whether the error exists in the original sequence; and
j) repeating steps (a) to (d) until the program is debugged.

7. A method of Claim 4 or 5, further comprising:
changing the management information stored in the step transition management table (5C) in order to specify a different step sequence; and
analyzing the effect of the changed sequence to determine if an error exists.

8. A method as claimed in Claim 7,
further comprising the step of changing the specified program sequence by either adding or deleting steps by changing the step transition management information.

9. A method as claimed in Claim 7 or 8,
further comprising the step of changing the run program (5A) by changing the correspondence between the step label and the memory addresses of the run program (5A).

10. A method as claimed in any one of Claims 7 to 9,
further comprising the step of displaying identifying information for changing the management information.

11. A method of Claim 4 or 5,
further comprising the debugging steps of:
f) changing the management information stored in the step transition management table (5C) in order to specify a different step sequence; and
g) locating errors in the program by analyzing the operation of the program in both the original and different step sequences.

12. A method as claimed in Claim 11,
wherein the different step sequence includes steps not executed in the original step sequence.

## Patentansprüche

1. Programmierbare Steuerung zur Ausführung eines Ablaufprogramms, das eine Vielzahl von Schritten umfaßt, die einem bestimmten Weg folgen, wobei jeder Schritt Objektbereiche und Übergangsbereiche zur Ausführung durch ein jeweiliges Laufprogramm aufweist und durch einen Kennsatz identifiziert ist, wobei die Steuerung folgendes aufweist:
einen Speicher (5) zum Speichern der Laufprogramme (5A) unter jeweiligen Adressen,
gekennzeichnet durch
a) eine Aktivschritt-Tabelle (4A) zum Speichern wenigstens eines Kennsatzes, der einen aktiven Schritt in dem Laufprogramm (5A) angibt,
b) eine Schrittausführungsadressen-Tabelle (5B) zum Speichern von Speicheradressen des Laufprogamms (5A) entsprechend dem Kennsatz oder den Kennsätzen,
c) eine Aktivschritt-Ausführungseinrichtung (7) zum aus der Schrittausführungsadressen-Tabelle (5B) erfolgenden Auslesen der Speicheradresse des Laufprogramms (5A), die dem in der Aktivschritt-Tabelle (4A) gespeicherten Kennsatz entspricht, sowie zum Lesen und Ausführen des dem aktiven Schritt entsprechenden Laufprogramms (5A),
d) eine Schrittübergangsmanagement-Tabelle (5C) zum Speichern von Managementinformation für einen Übergang von einem derzeit aktiven Schritt zu dem nächsten aktiven Schritt, wobei die Managementinformation wenigstens eine Identifizierung der Nummer der nächsten aktiven Schritte, auf die der derzeit aktive Schritt direkt übergeht, sowie wenigstens einen Kennsatz für jeden nächsten aktiven Schritt aufweist, und durch
e) eine Aktivschritt-Übergangseinrichtung (8) zum Speichern eines Kennsatzes für den nächsten aktiven Schritt in der Aktivschritt-Tabelle (4A) in Abhängigkeit von der Übergangs-Managementinformation, die in der Schrittübergangsmanagement-Tabelle (5C) gespeichert ist.

2. Steuerung nach Anspruch 1,
weiterhin mit einer Schrittübergangsmanagement-Tabellen-Veränderungseinrichtung (9) zum Verändern der in der Schrittübergangsmanagement-Tabelle (5C) gespeicherten Managementinformation.

3. Steuerung nach Anspruch 1 oder 2,
wobei die Managementinformation durch einen externen Befehl veränderbar ist.

4. Verfahren zum Ausführen eines Ablaufprogramms mit einer Vielzahl von Schritten, die entlang eines bestimmten Weges ausführbar sind, wobei jeder Schritt durch einen Kennsatz identifiziert wird und ein in einem Speicher (5) gespeichertes, entsprechendes Laufprogramm aufweist,
wobei das Verfahren durch folgende Schritte gekennzeichnet ist:
a) Speichern (101) des Kennsatzes wenigstens eines aktiven Schrittes in dem Programm in einer Aktivschritt-Tabelle (4A),
b) Speichern von Speicheradressen der Laufprogramme (5A), die dem oder den Kennsätzen entsprechen, in einer Schrittausführungsadressen-Tabelle,
c) aus der Schrittausführungsadressen-Tabelle (5B) erfolgendes Auslesen der Speicheradresse des Laufprogramms (5A), das dem in der Aktivschritt-Tabelle (4A) gespeicherten Kennsatz entspricht, und Ausführen des dem derzeit aktiven Schritt entsprechenden Laufprogramms (5A),
d) in einer Übergangsmanagement-Tabelle (5C) erfolgendes Speichern von Managementinformation bezüglich des Übergangs von einem derzeit aktiven Schritt auf den nächsten aktiven Schritt, wobei die Managementinformation wenigstens eine Identifizierung der Nummer der nächsten aktiven Schritte, auf die der derzeit aktive Schritt direkt übergeht, sowie wenigstens einen Kennsatz für jeden nächsten aktiven Schritt aufweist, und
e) Speichern des Kennsatzes für den nächsten aktiven Schritt in der Aktivschritt-Tabelle (4A) in Abhängigkeit von der im Schritt (d) in der Übergangsmanagement-Tabelle (5C) gespeicherten Übergangs-Managementinformation.

5. Verfahren nach Anspruch 4,
mit dem weiteren Schritt der selektiven Veränderung von in der Übergangsmanagement-Tabelle (5C) gespeicherter Managementinformation.

6. Verfahren nach Anspruch 4 oder 5,
wobei weiterhin folgende Fehlerbeseitigungsschritte ausgeführt werden:
f) Wiederholen der Schritte (a) bis (e), bis das Programm durchgelaufen ist;
g) Identifizieren eines Fehlers sowie derjenigen Schritte, bei denen es sich um potentielle Quellen für den Fehler handelt;
h) Verändern der in der Schrittübergangsmanagement-Tabelle (5C) gespeicherten Managementinformation zum Spezifizieren einer anderen Schrittabfolge zum Lokalisieren oder Korrigieren des Fehlers;
i) Analysieren der Wirkung der veränderten Abfolge zur Bestimmung, ob der Fehler in der ursprünglichen Abfolge vorhanden ist; und
j) Wiederholen der Schritte (a) bis (d), bis das Programm fehlerfrei ist.

7. Verfahren nach Anspruch 4 oder 5,
mit folgenden weiteren Schritten:
Verändern der in der Schrittübergangsmanagement-Tabelle (5C) gespeicherten Managementinformation zum Spezifizieren einer anderen Schrittabfolge; und Analysieren der Wirkung der geänderten Abfolge zur Bestimmung, ob ein Fehler vorhanden ist.

8. Verfahren nach Anspruch 7,
mit dem weiteren Schritt der Veränderung der spezifizierten Programmabfolge entweder durch Hinzufügen oder durch Streichen von Schritten durch Verändern der Stufenübergangs-Managementinformation.

9. Verfahren nach Anspruch 7 oder 8,
mit dem weiteren Schritt der Veränderung des Laufprogramms (5A) durch Verändern der Entsprechung zwischen dem Schritt-Kennsatz und den Speicheradressen des Laufprogramms (5A).

10. Verfahren nach einem der Ansprüche 7 bis 9,
mit dem weiteren Schritt der Anzeige von Identifizierinformation zum Verändern der Managementinformation.

11. Verfahren nach Anspruch 4 oder 5,
wobei weiterhin folgende Fehlerbeseitigungsschritte ausgeführt werden:
f) Verändern der in der Schrittübergangsmanagement-Tabelle (5C) gespeicherten Managementinformation zum Spezifizieren einer anderen Schrittabfolge; und
g) Lokalisieren von Fehlern in dem Programm durch Analysieren des Betriebsablaufs des Programms sowohl in der ursprünglichen als auch in der anderen Schrittabfolge.

12. Verfahren nach Anspruch 11,
wobei die andere Schrittabfolge Schritte beinhaltet, die in der ursprünglichen Schrittabfolge nicht ausgeführt werden.

## Revendications

1. Unité de commande programmable pour exécuter un programme en séquence qui comprend une pluralité d'étapes qui suivent un trajet désigné, chaque étape comprenant des parties objet et des parties de transition pour être mises en oeuvre par un programme exécutable respectif et identifiées par un label, ladite unité de commande comprenant :
- une mémoire (5) pour stocker les programmes exécutables (5A) à des adresses respectives, caractérisée par :
a) une table d'étape active (4A) pour stocker au moins un label qui indique une étape active dans le programme exécutable (5A),
b) une table d'adresses d'exécution d'étape (5B) pour stocker les adresses en mémoire du programme exécutable (5A) en correspondance du label ou des labels,
c) des moyens d'exécution d'étape active (7) pour lire depuis la table d'adresses d'exécution d'étape (5B) l'adresse en mémoire du programme exécutable (5A) qui correspond au label stocké dans la table d'étape active (4A) et pour lire et exécuter le programme exécutable (5A) qui correspond à l'étape active ;
d) une table de gestion de transition d'étape (5C) pour stocker les informations de gestion pour une transmission depuis une étape active actuelle à l'étape active suivante, dans laquelle les informations de gestion comprennent au moins une identification du nombre des étapes actives suivantes auxquelles l'étape active actuelle effectue un transit direct et au moins un label pour chaque étape active suivante, et
e) des moyens de transition d'étape active (8) pour stocker un label pour l'étape active suivante dans la table d'étape active (4A) selon les informations de gestion de transition stockées dans la table de gestion de transition d'étape (5C).

2. Unité de commande selon la revendication 1,
comprenant en outre des moyens de changement de table de gestion de transition d'étape (9) pour changer les informations de gestion stockées dans la table de gestion de transition d'étape (5C).

3. Unité de commande selon l'une ou l'autre des revendications 1 et 2,
dans laquelle les informations de gestion sont susceptibles d'être changées par une commande externe.

4. Procédé pour exécuter un programme en séquence qui comprend une pluralité d'étapes qui suivent un trajet désigné, chaque étape étant identifiée par un label et comportant un programme exécutable correspondant (SA) stocké dans une mémoire (5), le procédé étant caractérisé par les étapes consistant à :
a) stocker (101) dans une table d'étape active (4A) le label d'au moins une étape active dans le programme,
b) stocker dans une table d'adresses d'exécution d'étape (5B) les adresses en mémoire des programmes exécutables (5A) qui correspondent au label ou aux labels,
c) lire depuis la table d'adresses d'exécution d'étape (5B) l'adresse en mémoire du programme exécutable (5A) qui correspond au label stocké dans la table d'étape active (4A) et exécuter le programme exécutable (5A) qui correspond à l'étape active actuelle,
d) stocker dans une table de gestion de transition (5C) des informations de gestion qui concernent la transition depuis une étape active actuelle à l'étape active suivante, dans laquelle les informations de gestion comprennent au moins une identification du nombre des étapes actives suivantes auxquelles l'étape active actuelle effectue un transit direct, et au moins un label pour chaque étape active suivante, et
e) stocker le label pour l'étape active suivante dans la table d'étape active (4A) selon les informations de gestion de transition stockées dans la table de gestion de transition (5C) à l'étape (d).

5. Procédé selon la revendication 4,
comprenant l'étape supplémentaire consistant à changer sélectivement les informations de gestion stockées dans la table de gestion de transition (5C).

6. Procédé selon l'une ou l'autre des revendications 4 et 5, comprenant en outre les étapes de débogage consistant à :
f) répéter les étapes (a) à (e) jusqu'à ce que le programme a été exécuté ;
g) identifier une erreur ainsi que celles des étapes qui sont des sources d'erreurs potentielles ;
h) changer les informations de gestion stockées dans la table de gestion de transition d'étape (5C) pour spécifier une séquence d'étapes différente afin de situer ou de corriger l'erreur ;
i) analyser l'effet de la séquence changée pour déterminer si l'erreur existe dans la séquence d'origine ; et
j) répéter les étapes (a) à (d) jusqu'à ce que le programme soit débogué.

7. Procédé selon l'une ou l'autre des revendications 4 et 5, comprenant en outre les phases consistant à :
on change les informations de gestion stockées dans la table de gestion de transition d'étape (5C) afin de spécifier une séquence d'étapes différente ; et
on analyse l'effet de la séquence changée pour déterminer si une erreur existe.

8. Procédé selon la revendication 7,
comprenant en outre l'étape consistant à changer la séquence de programme spécifiée soit en ajoutant soit en supprimant des étapes, en changeant les informations de gestion de transition d'étape.

9. Procédé selon l'une ou l'autre des revendications 7 et 8, comprenant en outre l'étape consistant à changer le programme exécutable (5A) en changeant la correspondance entre le label d'étape et les adresses en mémoire du programme exécutable (5A).

10. Procédé selon l'une quelconque des revendications 7 à 9, comprenant en outre l'étape consistant à afficher des informations d'identification pour changer les informations de gestion.

11. Procédé selon l'une ou l'autre des revendications 4 et 5, comprenant en outre les étapes de débogage suivantes :
f) on change les informations de gestion stockées dans la table de gestion de transition d'étape (5C) afin de spécifier une séquence d'étapes différente ; et
g) on localise les erreurs dans le programme en analysant le fonctionnement du programme à la fois dans la séquence d'étapes d'origine et dans la séquence d'étapes différente.

12. Procédé selon la revendication 11,
dans lequel la séquence d'étapes différente inclut des étapes qui ne sont pas exécutées dans la séquence d'étapes d'origine.
